# EUROPEAN PATENT SPECIFICATION

(11) **EP 4 486 143 B1**
(45) Date of publication and mention of the grant of the patent: **27.05.2026**
(21) Application number: 23713512.4
(22) Date of filing: 03.03.2023
(51) Int. Cl.: A23L 27/27, A23P 10/30, A23P 30/20, C12C 3/00

(54) **ENCAPSULATED HOP COMPOSITION, METHOD OF PROVIDING THE COMPOSITION AND ITS USE**
VERKAPSELTE HOPFENZUSAMMENSETZUNG, VERFAHREN ZU IHRER BEREITSTELLUNG UND IHRE VERWENDUNG
COMPOSITION DE HOUBLON ENCAPSULÉE, PROCÉDÉ DE PRÉPARATION DE LA COMPOSITION ET SON UTILISATION

(30) Priority: 03.03.2022 US 202263316036 P
(43) Date of publication of application: 08.01.2025
(73) Proprietor: KALAMAZOO HOLDINGS, INC., Kalamazoo, MI 49006 (US)
(72) Inventor: BERDAHL, Donald, Richard, Lawton, MI 49065 (US); PRAET, Tatiana, Myriam Bernarda, San Mateo, CA 94403 (US)
(74) Representative: Swindell & Pearson Limited
(86) International application number: PCT/US2023/014420
(87) International publication number: WO 2023/168025

(56) References cited:
- CA-A- 780 908
- US-A1- 2009 087 512
- US-A1- 2011 256 199
- RODRIGUES ARRUDA TARSILA ET AL: "Exclusive Raw Material for Beer Production? Addressing Greener Extraction Techniques, the Relevance, and Prospects of Hops (Humulus lupulus L.) for the Food Industry", FOOD AND BIOPROCESS TECHNOLOGY ; AN INTERNATIONAL JOURNAL, SPRINGER-VERLAG, NEW YORK, vol. 15, no. 2, 9 October 2021 (2021-10-09), pages 275 - 305, XP037686428, ISSN: 1935-5130, [retrieved on 20211009], DOI: 10.1007/S11947-021-02716-W

## Description

### FIELD OF THE INVENTION

The present invention relates to encapsulation compositions and methods in which an encapsulate comprising hop oil components is encapsulated via melt extrusion in a glassy matrix containing a hop-derived acid which serves as an emulsifier to increase the hop oil loading. Melt extrusion is a known process and is used to stabilize and protect sensitive components from oxidation, polymerization or other degradation, to extend shelf life and to provide a convenient ambient-temperature shelf-stable, granular, solid delivery system. Whereas standard encapsulation technologies make use of common emulsifiers such as soy lecithin to emulsify an encapsulate with carbohydrates, use of such ingredients is frequently unacceptable in foods and beverages as soy contains allergens and therefore must be declared on the label of the finished product. Therefore, there is a need for encapsulation compositions using hop-derived emulsifiers suitable for use in the brewing of malt beverages such as beer, or other beverages which utilize hop compositions which are not allergenic. The use of hop-derived emulsifiers for an encapsulating matrix provides products which may be added at various points in the brewing process and which will be accepted by brewers who are concerned about both labeling requirements and consumer perceptions.

US 2011/256199 A1 relates to active encapsulation compositions which are stable in the glassy state at ambient temperatures are prepared by melt extrusion of a ternary carrier blend comprising of 1) a food polymer, 2) a spice or herb, and 3) a low molecular weight sugar or polyol.

The present invention relates to replacement of common emulsifiers by hop acids and their oxidized or reduced derivatives, including but not limited to isoalpha acids, tetrahydro-isoalpha acids, hexahydro-isoalpha acids, humulinones, hulupones and other modified or oxidized derivatives of alpha and beta acids and their salt forms, resulting in a granule in which both encapsulate and emulsifier are 100% hop-derived and which is suitable for use in the brewing industry. Use of such hop acids has been found to increase the loading of the encapsulate (hop oil) compared to a glassy matrix which does not contain this hop acid as emulsifier. It has also been found that particular hop-derived acids such as, but not limited to, hexahydro-isoalpha acids lead to decreased turbidity upon addition of the granule to a beverage, compared to the use of soy lecithin as an emulsifier. Thus, dispersion of encapsulates comprising hop oil components is improved when using hop-derived acids for emulsification purpose. The present invention also relates to processes for preparing such compositions and use of the compositions in food and beverage applications.

### BACKGROUND OF THE INVENTION

The production of beer and other brewed beverages has traditionally involved the addition of hops and hop derivatives thereto. Hops impart a distinctive bitterness to beer as well as unique flavors and aromas. Moreover, hops are a critical component to stabilize beer foam and lacing and help provide resistance against microbial spoilage. Thus, hops are an essential ingredient in the manufacture of beer.

Production of beer is a complex process which typically involves the following general steps (Briggs, D. E., et al., Brewing - Science and Practice, Woodhead Publishing, LTD: Cambridge, England, 2004; Kunze, W., Technology Brewing and Malting - 5th English Edition, VLB Publishers: Berlin, 2014):
(1) Milling, mashing, and lautering of malted barley/cereal grains to produced un-hopped wort which contains fermentable sugars such as maltose
(2) Kettle boil with hops
(3) Clarification of boiled wort to remove undesirable insoluble species
(4) Fermentation with yeast to convert sugars into ethanol and carbon dioxide
(5) Optionally, post-fermentation addition of hops, such as performed for "dry hopped" beers.

In a traditional brewing process, the wort is transferred into a vessel commonly referred to as a brewing or brew kettle. In this vessel the wort will be boiled for a period of time, which is typically less than two hours. Hops, hop extracts, or other hop products are added to the brew kettle at various times. Other flavoring ingredients may also be added during the kettle boil. Traditional hopping with whole cone hops or hop pellets suffers from low utilization of hop oil components as well as loss of wort/beer due to the difficulty of separating the liquid from the hop plant material after boiling.

The primary flavoring ingredients in hops are largely composed of essential oils such as the monoterpene myrcene, sesquiterpenes such as humulene, ß-caryophyllene or farnesene, monoterpene alcohols such as linalool and geraniol, oxygenated sesquiterpenoids such as cadinol, caryophyllene oxide, humulenol II and other components such as esters, ketones, alcohol and ethers. A very large number of minor constituents provide hops with distinct flavor and aroma impact. Hop volatiles can also be present in the hop vegetative material in a bound state, such as aglycons bound to a sugar molecule or polyfunctional thiols bound to cysteine or glutathione. During the brewing process, the aglycon on polyfunctional thiol can be released from its bound state and as such contribute to hop aroma and flavor in beer.

Hop oil components are typically characterized by very low utilization in the brewing process. Non-polar terpenes are stripped out of the kettle during the boil, polymerized or oxidized. During the boiled wort clarification, more terpenes are lost due to adsorption to the hop vegetative material. Furthermore, during fermentation, some hop oil components are adsorbed to the yeast or bio transformed. Further losses can also occur during beer filtration. Only a minor fraction of the more polar oxygenated terpenes survives the brewing process and ends up in beer at levels which are significant enough to contribute to hop aroma and flavor.

Hop producers have created hop oil products which can be added post-fermentation, resulting in greatly enhanced utilization. The ability to control dosing levels, product consistency, and higher utilization has led to advanced hop products being popular alternatives to traditional hops. Current hop oil products in the marketplace consist of neat oils, hop oil emulsions or solutions of hop oil in ethanol or propylene glycol. These products suffer from stability problems. In addition, ethanol is a flammable solvent which requires special packaging, transport and handling. This adds significant cost. Propylene glycol is not found in nature and is not accepted by many brewers. In addition, the solutions in propylene glycol are limited in concentration due to the low solubility of the terpenes. A solution at 0.1-2% concentration in either ethanol or propylene glycol is typical of current hop aroma and flavor products which are added to beer post-fermentation. Products of such low concentration result in large volumes of carrier which requires larger warehouse space and higher transportation costs.

Hops and hop products are notoriously unstable. The active flavoring components are readily oxidized in air, which generates new compounds, often with undesirable flavors and aromas. Hop constituents, such as myrcene, undergo oligomerization when exposed to oxygen. Thus, hop producers go to great lengths to protect their product from degradation prior to use by the brewer. This includes rapid drying of the hop cones, pelletizing at low temperatures, sealing the hops under an inert gas in impermeable Mylar bags, and keeping the hops frozen during shipping and storage prior to use at the brewery. Despite these extensive efforts, hops and hop products continue to suffer from limited shelf life and product inconsistencies.

Thus, a need exists for hop products with improved stability.

Encapsulation of food ingredients in a protective matrix has been extensively employed for many years as a means to stabilize reactive ingredients (Risch, S. J., Reineccius, G. A., Eds. - Flavor Encapsulation, ACS Symposium Series 370, American Chemical Society: Washington, DC, 1988; Garti, N.; McClements, D. J., Eds. - Encapsulation Technologies and Delivery Systems for Food Ingredients and Nutraceuticals, Woodhead Publishing, LTD: Cambridge, England, 2012; Risch, S. J.; Reineccius, G. A., Eds. - Encapsulation and Controlled Release of Food Ingredients, ACS Symposium Series 590, American Chemical Society: Washington, DC, 1995; Porzio, M., Perfumer and Flavorist, 2008, 33, 48-53).

There are numerous encapsulation technologies commercially available including:
➢ Plating or Dry-Blending
➢ Spray-Drying
➢ Fluidized Bed Coating
➢ Agglomeration/Compaction
➢ Spray-Chilling
➢ Extrusion and Complex Coacervation

Each of the above-mentioned techniques has been thoroughly studied and is widely practiced for the production of encapsulated delivery systems for food ingredients (US 2012/0027866; US 2010/0172945; US 7,488,503; US 2007/0128234; US 6,416,799; US 5,897,897; US 5,786,017; US 5,603,971; US 4,689,235; US 4,610,890; US 3,704,137; US 3,041,180; US 2,809,895). Encapsulated products have many advantages over standard product forms, including greater stability, longer shelf life, solid vs. liquid form, and ease of handling.

A need exists in the brewing industry for hop products with improved stability and ease of use. A need also exists in the brewing industry for hop products which do not require refrigerated storage. A need also exists for products from traditional brewing ingredients due to consumer demands and regulatory labeling requirements. Many of the commercial encapsulation technologies require the use of emulsifiers. One popular technology used to encapsulate many kinds of essential oils relies on soy lecithin as an excellent emulsifier. In most countries this compound is regarded as an allergen which requires labeling. Customers are often concerned about the genetically modified organism (GMO) status of products derived from soy.

Many encapsulation technologies rely on carbohydrates of various kinds to serve as the encapsulating substances. For brewing , this presents unique challenges. Products which are added to the brewing kettle may contain fermentable components while products added post-fermentation should not contain objectionably large amounts of fermentable sugars which could cause unwanted fermentation after the beer is packaged. Products containing small amounts of fermentable sugars which do not cause significant fermentation can be added post-fermentation.

There is a need for stable encapsulated hop oil products which can be added at various stages of the brewing process to provide hop aroma and flavors in a controllable and consistent manner.

There is a need for encapsulated hop oil products which can be used in brewing which do not contain allergenic or GMO materials.

There is a need for encapsulated hop oil products with high hop oil loads which reduce shipping costs and storage space requirements.

There is a need for encapsulated hop oil products which can be stored for long periods of time without degradation at extreme storage temperatures including up to 40-50 degrees Celsius.

### OBJECTS OF THE INVENTION

It is an object of the present invention to provide an encapsulated form of hop flavor and aroma products using hop-acid derived emulsifiers in the encapsulation process, but in amounts which impart insignificant bitterness to the finished beer. Hop oils which are encapsulated are more stable to degradation processes like oxidation and oligomerization and will have significantly longer shelf lives than their un-encapsulated forms.

It is further an object of this invention to utilize hop acid derived emulsifiers in the encapsulation of hop oils and, optionally others flavors or aromas, in carbohydrate matrices which provide a higher loading in the encapsulated products than are possible in the absence of these hop acids.

It is further an object of this invention to utilize hop acid derived emulsifiers in the encapsulation of hop oils and optionally other flavors or aromas, in stable carbohydrate matrices, which when added to water or beer result in a lower turbidity suspension than when adding comparable products made using vegetable lecithins as the emulsifiers to water or beer.

It is a further object of the present invention to provide hop aroma and flavor compositions which are stabilized against oxidative degradation via encapsulation with an emulsifier which is common to the brewing practice and does not require additional labeling or confer other undesirable attributes to the final product.

### SUMMARY OF THE INVENTION

The present invention can be described as a solid delivery system in which hop oils, and optionally other flavors or aromas, are encapsulated in a carbohydrate matrix made from a blend of polysaccharides and mono or disaccharides, with the emulsifying assistance of hop acids and derivatives.

The present invention also embraces blends of hop oils or hop oil constituents with other flavor or aroma substances such as spice and herb essential oils or citrus oils.

The present invention solves a serious stability issue which characterizes and limits the usefulness of current hop oil formulations, such as neat hop oils or hop oils in carriers such as ethanol or propylene glycol.

The present invention relates to stable encapsulated compositions which are useful for adding aroma and flavor to beer and related beverages, which comprise a carbohydrate-based encapsulating substance, a hop acid emulsifying substance and one or more hop oil constituents and, optionally, other aromas or flavors.

In one aspect of the present invention, the hop acid emulsifying substance serves to increase the loading of the one or more hop oil constituents and, optionally other aromas or flavors, in the encapsulated composition compared to an identical formulation which does not contain the hop acid emulsifying substance.

In another aspect of the present invention, the carbohydrate-based encapsulating substance serves to protect the hop oils, and optionally other aromas or flavors from degradation, oxidation, polymerization or oligomerization.

In another aspect of the present invention, the hop acid emulsifying substance serves to help disperse the hop oils in the liquid when the encapsulated product is added to water, wort, beer, cider or similar beverages.

In another aspect of the present invention, the encapsulated product can be formulated with appropriate amounts of hop oil constituents which can be metabolized by brewer's yeast and added to the brewing process before fermentation such that new aromas not present in the hops are generated during fermentation.

In another aspect of the present invention, the encapsulated product can be formulated with appropriate amounts of hop oil constituents which are easily oxidized and added to the brew kettle prior or during the boil such that new aroma compounds can be generated during the wort boil.

In another aspect of the present invention, the encapsulated product is added to the brewing process such that the contents are subjected to the action of yeast or bacteria.

Another aspect of the present invention is a method to add flavor and aroma to beer by the addition of encapsulated products comprising a carbohydrate encapsulating matrix, a hop acid emulsifying agent, hop oils, and optionally other flavors and aromas, the addition of said encapsulated products being added optionally in the brew kettle, the whirlpool, the fermenter, the bright beer tank, prior to filtration, or any combination thereof.

Another aspect of the present invention is a method to manufacture beer by adding the encapsulated product comprising a carbohydrate encapsulating matrix, a hop acid emulsifying agent, hop oils, and optionally other flavors and aromas at some point in the manufacturing process.

Another aspect of the present invention is a method to add flavor to a non-beer beverage by adding the encapsulated product comprising a carbohydrate encapsulating matrix, a hop acid emulsifying agent, hop oils, and optionally other flavors and aromas at some point in the manufacturing process.

### DETAILED DESCRIPTION OF THE INVENTION

The inventors have surprisingly discovered that hop acids as defined herein are effective replacements for standard emulsifiers such as soy lecithin in the encapsulation of hop oils and optionally, other aromas and flavors in carbohydrate matrices. This finding makes possible encapsulated compositions which contain ingredients which are completely acceptable to brewers and do not require labeling. The encapsulated products are non-allergenic and contain no genetically modified ingredients.

In this document, hop acid(s) are defined as acids or combinations of acids derived from hops, whether naturally present or modified using thermal, oxidative or reductive practices. Examples of such hop acids include: humulones (alpha acids), lupulones (beta acids), isohumulones (isoalpha acids), dihydro-isoalpha acids (rho), tetrahydro-isoalpha acids (tetra), hexahydro-isoalpha acids (hexa), humulinones, hulupones, and other oxidation or degradation products of the aforementioned compounds.

In this document hop oils are defined as whole hop oils, hop oil fractions, whether obtained by distillation, chromatography, partitioning or other separation methods, single hop oil constituents, blends of hop oil constituents, substances derived from hop oils by enzymatic, chemical or biochemical means, and polyfunctional thiols.

In this document, other flavors or aromas include spice, herb and botanical essential oils and extracts.

Examples of hop acids useful as emulsifiers in the present invention comprise, humulones (alpha acids), lupulones (beta acids), isohumulones (isoalpha acids), dihydro-isoalpha acids (rho), tetrahydro-isoalpha acids (tetra), hexahydro-isoalpha acids (hexa), humulinones, hulupones, and other oxidation or degradation products of the aforementioned compounds, or mixtures thereof.

The hop oils can be whole hop oils obtained from hops using any of the methods known in the art. They can be fractions of whole hop acids obtained by any separation technology, including fractional distillation at atmospheric or reduced pressure, chromatography, including separations using supercritical fluids such as supercritical carbon dioxide, partitioning or other separation methods. The hop oils can also be single hop oil constituents, blends of hop oil constituents, substances derived from hop oils by enzymatic, chemical or biochemical means, and polyfunctional thiols.

The other flavors and aromas which can be optionally added to the hop oils comprise spice, herb and botanical essential oils and extracts.

Encapsulated products of the present invention provide great flexibility in how the hop oil, and optionally other aromas and flavors can be added to the brewing process. The encapsulated products of the present invention give brewers the ability to greatly improve the utilization of hop oils and optionally other aromas and flavors. Certain hop oils can be added to the brew kettle to facilitate desirable oxidation processes which generate new desirable flavors, while saving other hop oils which would be lost due to steam volatilization during the kettle boil for addition later in the process. Encapsulated hop oil products can be developed to contain mainly the hop oil constituents which undergo desirable yeast-mediated metabolic processes during fermentation and generate additional desirable flavors. These products can be added at the whirlpool or during fermentation directly. Other hop oils and, optionally other aromas and flavors can be added post-fermentation with very high flavor conservation and utilization.

All manner of hop oils, hop oil fractions, single hop oil constituents or blends of hop oil constituents and optionally other aromas and flavors can be separately encapsulated and provided to product developers as a kit which would have an extraordinarily long shelf life. Product developers could design new beers and other beverages very simply by combining these stable ingredients in differing amounts to base beers to provide a broad range of flavors and aromas.

A detailed summary of the inventive composition is an extrusion encapsulation composition in a glassy state, comprising:
➢ An encapsulate (A) for providing flavor and aroma, but organoleptically insignificant bitterness to beer, containing at least one substance consisting of whole hop oil, hop oil fractions, single compounds derived from hop oil, hop compounds derived from flavor precursors or blends of the aforementioned components optionally with other botanical extracts,
➢ encapsulated in (B) a glassy matrix, wherein said glassy matrix (B) comprises: 0.5 to 5% by weight, based on the total weight of said glassy matrix (B), of at least one substance selected from isoalpha acids, tetrahydro-isoalpha acids, hexahydro-isoalpha acids, humulinones, hulupones and other modified or oxidized derivatives from alpha and/or beta acids and their salt forms,
➢ and 88 to 99% by weight, based on the total weight of said glassy matrix (B), of at least one carbohydrate comprising a maltodextrin, a sugar and/or a polyol, wherein the load of whole hop oil, hop oil fractions, single compounds derived from hop oil, hop compounds derived from flavor precursors or blends of the aforementioned components optionally with other botanical extracts (A) is from 4% to 15% by weight, based on the total weight of the extrusion encapsulation composition,
➢ and wherein the load of the encapsulate (A) is increased due to the presence of the isoalpha acids, tetrahydro-isoalpha acids, hexahydro-isoalpha acids, humulinones, hulupones or other modified or oxidized derivatives of alpha and beta acids in the glassy matrix (B), compared to a level of the encapsulate (A) when the glassy matrix (B) does not contain at least one of the isoalpha acids, tetrahydro-isoalpha acids, hexahydro-isoalpha acids, humulinones, hulupones or other modified or oxidized derivatives of alpha and beta acids;
➢ wherein said extrusion encapsulation composition is prepared by a process comprising:
   (i) mixing components of the glassy matrix (B), the encapsulate (A), and, optionally, a plasticizer which may be water at an elevated temperature, thereby obtaining a blend having a water content of below 10% by weight, and melting the blend, thereby obtaining a melted mixture comprising the encapsulate (A) and the glassy matrix (B) and having a water content of below 10% by weight;
   (ii) extruding, shaping, optionally washing and cooling said melted mixture, thereby obtaining said extrusion encapsulation composition, wherein said encapsulate (A) is encapsulated in the glassy matrix (B), and
   (iii) optionally, drying the extruded encapsulation composition, wherein, the shaping is performed by extruding and die-face cutting the melted mixture to form particles.

### EXAMPLES

The following examples illustrate the invention without limiting its scope.

### Example 1 - Encapsulation of a Hop Terpene Fraction using 0.7%

### Hexahydroisoalpha Acids

To a low-moisture carbohydrate melt composed of maltodextrins and sucrose and including hexahydro-isoalpha acids as emulsifying agent, is added a liquid hop oil sesquiterpene fraction consisting of 31% beta-caryophyllene and 36% humulene under vigorous agitation. The resulting molten emulsion is forced through a die into a cold bath of isopropyl alcohol or other suitable volatile solvent. The resulting amorphous solid is broken into smaller pieces via mechanical agitation, and the resulting particles containing encapsulated hop oil terpenes are recovered via centrifugation or filtration and dried under vacuum. Encapsulated product from this process containes 5 - 10% hop oil load and 0.5-1% hexahydroisoalpha acids. The encapsulated product is an easy to handle solid and is very stable towards oxidative degradation.

### Example 2 - Encapsulation of a Hop Sesquiterpene Epoxide Fraction using 1.6% Hexahydroisoalpha Acids

To a low-moisture carbohydrate melt composed of maltodextrins and sucrose and including hexahydro-isoalpha acids as emulsifying agent, is added a liquid hop oil fraction containing 55% sesquiterpene epoxides including caryophyllene epoxide, humulene epoxide I, II and III under vigorous agitation. The resulting molten emulsion is forced through a die into a cold bath of isopropyl alcohol or other suitable volatile solvent. The resulting amorphous solid is broken into smaller pieces via mechanical agitation, and the resulting particles containing encapsulated hop oil sesquiterpene epoxides are recovered via centrifugation or filtration and dried under vacuum. Encapsulated product from this process contained 5 - 10% hop oil load and 1-2% hexahydroisoalpha acids. The encapsulated product is an easy to handle solid and is very stable towards oxidative degradation.

### Example 3 - Encapsulation of Hop Oil in Carbohydrate Matrix using Hop Acids

### Formula details

| ***Ingredient*** | ***Quantity (g)*** |
|---|---|
| Sucrose | 1188.0 |
| 5DE MD | 1089.0 |
| 18DE MD | 363.0 |
| Hop Oil | 300.0 |
| Emulsifier | Hexahydro-isoalpha acids |
| Ratio Emulsifier/Oil | 0.2 and 0.4 |

A syrup mixture of sucrose and maltodextrins was prepared by dissolving the solids into demineralized water at a ratio solid/water of 80/20 by weight. The syrup mixture was heated to boiling. The temperature was increased to between 115°C and 120°C to reduce the water content to 7-8%w/w. The hot melt was kept at this elevated temperature and the following two-step addition was performed: An iso-alpha acid solution was added into the melt, followed by 1 minute of mixing and the subsequent addition of the Hop oil. The oil was then dispersed into small oil droplets via mechanical agitation.

The hot melt emulsion was extruded through a nozzle to form strands, which subsequently contacted an agitated bath of cold isopropyl alcohol to rapidly solidify the strands. The solid strands were washed (in the form of small irregular rods) using mechanical agitation in isopropyl alcohol. The resulting solid material was then collected from the isopropyl alcohol bath and dried.

Low field NMR technique confirmed that the final product, which is stable to oxidative degradation, contained between 7.5 and 8.3% oil by weight. Replacement of soy lecithin with hop acid resulted in lower recovery of hop oil from the product, but still an acceptable level, e.g., for a premium brewed beverage product.

### Example 4 - Encapsulation of a Hop Oil and Botanical Extract Blend using 2% Isoalpha Acids

To a low-moisture carbohydrate melt composed of maltodextrins and sucrose and including isoalpha acids as emulsifying agent, is added a liquid hop oil monoterpene fraction and blood orange botanical extract blend. The resulting molten emulsion is forced through a die into a cold bath of isopropyl alcohol or other suitable volatile solvent. The resulting amorphous solid is broken into smaller pieces via mechanical agitation, and the resulting particles containing encapsulated hop and blood orange essential oils are recovered via centrifugation or filtration and dried under vacuum. Encapsulated product from this process contains 5 - 10% essential oil load and 1-2% isoalpha acids. The encapsulated product is an easy to handle solid and is very stable towards oxidative degradation.

### Example 5 - Brewing of Beer or Other Fermented Beverages Using Encapsulated Hop Aroma Components with Carbohydrates and a Hop Acid-Derived Emulsifier

To wort produced from malted barley, wheat, other brewing grains, extracts of these brewing ingredients, or any combination thereof is added an encapsulated hop flavor and aroma formulation as described in Examples 1-3, or combinations and variations thereof. The hopped wort is then converted into finished beer via traditional processes known to those skilled in the art, which could include boiling, separation of insoluble species, chilling the hopped wort, fermentation with yeast, conditioning, filtering, and other operations. The resulting beverage is characterized by pronounced hop aroma and flavor with no significant bitterness imparted by the encapsulated product. Alternatively, the encapsulated hop components are added to the sweet wort solution following the boiling step and/or at any point prior to fermentation of the sugars with yeast.

### Example 6 - Post-Fermentation Addition of Encapsulated Hop Components in the Manufacture of Beer or Other Fermented Beverages

To a fermented beverage generated via traditional processes known to those skilled in the art is added a suitable amount of an encapsulated hop aroma and flavor composition as described in Examples 1-3, or combinations or variations thereof. The addition of encapsulated hop components is performed either before or after a final filtration of the beverage via methods known to those skilled in the art. The resulting beverage is characterized by pronounced hop aroma and flavor with no significant bitterness imparted by the encapsulated product.

### Example 7 - Addition of High Doses of Encapsulated Hop Oil Terpenes to a Low-Turbidity Beverage

To a low-turbidity beverage was added a high amount of encapsulated hop oil terpenes aiming at a final terpene concentration up to 25 ppm. The resulting beverage was characterized by a pronounced decrease in turbidity compared to the beverage to which encapsulated product containing soy lecithin as an emulsifier was added. At a dosing of 20 ppm hop oil terpenes, the turbidity was 15-20 NTU, compared to 35-45 NTU when adding encapsulated product containing soy lecithin.

### Example 8 - Addition of High Doses of Encapsulated Hop Oil Terpenes During the Boiling Step of the Brewing Process

To a boiling wort is added a high amount of encapsulated hop oil terpenes aiming at a final terpene concentration of 10-100 ppm. The added encapsulate comprises a hop oil terpene fraction including beta-caryophyllene and alpha-humulene, and cis-humulinone is present as emulsifying agent. The vigorous boil results in a quick dissolution of the encapsulating carbohydrates and dispersion of the hop oil constituents in the boiling wort is facilitated by the presence of the hop acid emulsifier. At least a portion of the terpenes is oxidized to epoxides such as caryophyllene epoxide and humulene epoxide I, II and III, and at least a portion of these epoxides is further rearranged into allylic alcohols such as humulenol II, caryophyllenol and caryophylladienol. These oxidation and rearrangement products are more polar and can survive the brewing process and end up in the finished beer, where they typically impart spicy and herbal hop aromas characteristic for 'kettle hop' or 'noble hop' aroma such as found in traditional Pilsner type beers. The resulting beverage is characterized by a such 'spicy', 'woody', 'herbal' and 'noble' flavor notes and has an increased mouthfeel compared to a brew to which encapsulated hop oil terpenes were not added. In addition, also the bitterness perception is enhanced.

### Example 9 - Loading of an Encapsulated Hop Oil Blend using 1% Hexahydro-isoalpha Acids

To a low-moisture carbohydrate melt composed of maltodextrins and sucrose and including hexahydro-isoalpha acids as emulsifying agent, is added a liquid hop oil blend consisting of monoterpene and sesquiterpene hydrocarbons, monoterpene alcohols, epoxides, esters and ketones under vigorous agitation. The resulting molten emulsion is forced through a die into a cold bath of isopropyl alcohol or other suitable volatile solvent. The resulting amorphous solid is broken into smaller pieces via mechanical agitation, and the resulting particles containing the encapsulated hop oil blend are recovered via centrifugation or filtration and dried under vacuum. Encapsulated product from this process contained 5 - 10% hop oil load. The encapsulated product has a comparable loading to the same encapsulated hop oil blend using soy lecithin as an emulsifier. However, the finished beverage containing the encapsulated product with the hop acid emulsifier does not require additional labeling and does not result in customer's concerns with regards to GMO and allergens, as opposed to the finished beverage to which encapsulated hop oil blend is added which contains the soy lecithin emulsifier.

### Example 10 - Loading of an Encapsulated Hop Oil and Other Natural Flavor Blend using 1% Hexahydro-isoalpha Acids

To a low-moisture carbohydrate melt composed of maltodextrins and sucrose and including hexahydro-isoalpha acids as emulsifying agent, is added a liquid hop oil blend consisting of hop monoterpene and sesquiterpene hydrocarbons, hop monoterpene alcohols, hop epoxides, hop esters, hop ketones and other natural flavors derived from non-hop botanical sources under vigorous agitation. The resulting molten emulsion is forced through a die into a cold bath of isopropyl alcohol or other suitable volatile solvent. The resulting amorphous solid is broken into smaller pieces via mechanical agitation, and the resulting particles containing the encapsulated hop oil and other natural flavor blend are recovered via centrifugation or filtration and dried under vacuum. Encapsulated product from this process contains 5 - 10% hop oil load. The encapsulated product has an increased loading compared to the same encapsulated hop oil and other natural flavor blend which is encapsulated without an emulsifier.

### Example 11 - Addition of an Encapsulated Hop Oil Monoterpene Alcohol Fraction at the Onset of Fermentation and Biotransformation by Yeast

To cooled wort pitched with yeast is added an encapsulated hop oil monoterpene alcohol fraction with a loading of 5-10% hop oil. Dosing is aimed at a hop oil concentration in the wort of 1-20 ppm. The added hop oil monoterpene alcohol fraction includes components such as linalool, nerol and geraniol. Dispersion of the relatively non-polar hop oil constituents is facilitated by the presence of hop acids in the encapsulated product. The wort is subsequently fermented and the yeast biotransforms at least a portion of the hop oil constituents, thereby altering the flavor profile of the hop oil composition. Geraniol is reduced into citronellol and converted into linalool via a translocation, while nerol is isomerized into geraniol or also converted into linalool via translocation. Linalool is converted into alpha-terpineol via a cyclization reaction, which in turn can be converted into terpin hydrate via hydration. The fermented wort is then converted into finished beer via traditional processes known to those skilled in the art, which could include conditioning, filtering, and other operations. The resulting beverage is characterized by pronounced floral-citrus hop aroma and flavor which is different from the aroma and flavor of the encapsulated hop oil fraction.

### Example 12 - Stability of an Encapsulated Hop Oil Terpene Blend using 1% Hop Acids as Emulsifier

To a low-moisture carbohydrate melt composed of maltodextrins and sucrose and including at least one hop acid as emulsifying agent, is added a liquid hop oil blend consisting of monoterpene and sesquiterpene hydrocarbons under vigorous agitation. The resulting molten emulsion is forced through a die into a cold bath of isopropyl alcohol or other suitable volatile solvent. The resulting amorphous solid is broken into smaller pieces via mechanical agitation, and the resulting particles containing the encapsulated hop oil blend are recovered via centrifugation or filtration and dried under vacuum. Encapsulated product from this process contained 5 - 10% hop oil load. The encapsulated product is stored at ambient temperature for up to two years. The same hop oil blend with identical monoterpene and sesquiterpene composition which is not encapsulated, but diluted to 0.1% in propylene glycol and 1% in ethanol, is also stored at ambient temperature for up to two years. After this storage period, both solid encapsulated product and liquid product in propylene glycol and ethanol are evaluated by analytical and sensory evaluation methods. Sensory evaluation with a trained panel demonstrates oxidized off flavors in the liquid products, while the flavor and aroma of the encapsulated product have remained identical to the flavor and aroma of the same oil blend stored in the freezer for the same time period. Thus, encapsulation proves to result in an enhanced oxidative stability resulting in superior aroma and flavor characteristics compared to liquid forms. Analytical evaluations show a hop oil composition of the encapsulated hop oil after two years identical to the profile of the hop oil blend at the time of encapsulation. There are no signs of polymerization, oxidation or degradation of hop oil constituents. On the other hand, both liquid forms show evidence of deterioration. Polymers and oxidation products of the terpenes are detected. Perillene is found as an oxidation product of myrcene, whereas a portion of alpha-humulene and beta-caryophyllene are converted into their epoxides. The hop oil composition has changed, proving a lower oxidative stability of these liquid forms compared to their encapsulated counterpart.

The present invention is not to be limited in scope by the specific embodiments described herein. Indeed, various modifications of the invention in addition to those described herein will become apparent to those skilled in the art from the foregoing description. Such modifications are intended to fall within the scope of the appended claims.

## Claims

1. An extrusion encapsulation composition in a glassy state, comprising:
- An encapsulate (A) for providing flavor and aroma, but organoleptically insignificant bitterness to beer, containing at least one substance consisting of whole hop oil, hop oil fractions, single compounds derived from hop oil, hop compounds derived from flavor precursors or blends of the aforementioned components optionally with other botanical extracts
- encapsulated in (B) a glassy matrix, wherein said glassy matrix (B) comprises: 88 to 99% by weight, based on the total weight of said glassy matrix (B), of at least one carbohydrate comprising a maltodextrin, a sugar and/or a polyol,
- wherein the load of whole hop oil, hop oil fractions, single compounds derived from hop oil, hop compounds derived from flavor precursors or blends of the aforementioned components optionally with other botanical extracts (A) is from 4% to 15% by weight, based on the total weight of the extrusion encapsulation composition, and
- wherein said extrusion encapsulation composition is prepared by a process comprising:
(i) mixing components of the glassy matrix (B), the encapsulate (A), and, optionally, a plasticizer, thereby obtaining a blend having a water content of below 10% by weight, and melting the blend, thereby obtaining a melted mixture comprising the encapsulate (A) and the glassy matrix (B) and having a water content of below 10% by weight,
(ii) extruding, shaping, and cooling said melted mixture, thereby obtaining said extrusion encapsulation composition, wherein said encapsulate (A) is encapsulated in the glassy matrix (B), and
(iii) optionally, drying the extruded encapsulation composition, wherein, the shaping is performed by extruding and die-face cutting the melted mixture to form particles;
**characterized in that**:
- glassy matrix (B) comprises: 0.5 to 5% by weight, based on the total weight of said glassy matrix (B), of at least one substance selected from isoalpha acids, tetrahydro-isoalpha acids, hexahydro-isoalpha acids, humulinones, hulupones and other modified or oxidized derivatives from alpha and/or beta acids and their salt forms and
- wherein the load of the encapsulate (A) is increased due to the presence of the isoalpha acids, tetrahydro-isoalpha acids, hexahydro-isoalpha acids, humulinones, hulupones and/or other modified or oxidized derivatives of alpha and/or beta acids in the glassy matrix (B), compared to a level of the encapsulate (A) when the glassy matrix (B) does not contain at least one of the isoalpha acids, tetrahydro-isoalpha acids, hexahydro-isoalpha acids, humulinones, hulupones and/or other modified or oxidized derivatives of alpha and/or beta acids.

2. The composition of claim 1, wherein said glassy matrix (B) decreases turbidity upon dispersion of the encapsulate in aqueous media, compared to turbidity level imparted by the encapsulate (A) when the glassy matrix (B) does not contain at least one substance selected from isoalpha acids, tetrahydro-isoalpha acids, hexahydro-isoalpha acids, humulinones, hulupones and other modified or oxidized derivatives from alpha and/or beta acids and their salt forms.

3. The composition of claim 1, wherein said glassy matrix (B) has a positive impact on the foam stability upon addition of the encapsulate to non-alcoholic and alcoholic beverages, compared to the foam stability of the beverage upon addition of the encapsulate (A) when the glassy matrix (B) does not contain at least one substance selected from isoalpha acids, tetrahydro-isoalpha acids, hexahydro-isoalpha acids, humulinones, hulupones and other modified or oxidized derivatives from alpha and/or beta acids and their salt forms.

4. The composition of claim 1, wherein said glassy matrix (B) prolongs the oxidative stability of the encapsulate (A), compared to the oxidative stability of the encapsulate (A) when the glassy matrix (B) does not contain at least one substance selected from isoalpha acids, tetrahydro-isoalpha acids, hexahydro-isoalpha acids, humulinones, hulupones and other modified or oxidized derivatives from alpha and/or beta acids and their salt forms.

5. The composition of claim 1, wherein said glassy matrix (B) does not impart any noticeable bitterness increase, compared to a glassy matrix (B) prepared without at least one substance selected from isoalpha acids, tetrahydro-isoalpha acids, hexahydro-isoalpha acids, humulinones, hulupones and other modified or oxidized derivatives from alpha and/or beta acids and their salt forms.

6. The composition of claim 1, wherein said glassy matrix (B) imparts a slight noticeable bitterness increase in the range from 0 to 10 BU, compared to bitterness imparted by the glassy matrix (B) wherein said glassy matrix (B) does not contain at least one substance selected from isoalpha acids, tetrahydro-isoalpha acids, hexahydro-isoalpha acids, humulinones, hulupones and other modified or oxidized derivatives from alpha and/or beta acids and their salt forms.

7. The composition of claim 1, wherein said glassy matrix (B) contains at least one carbohydrate comprising a malto dextrin, a sugar and/or a polyol, and at least one substance selected from isoalpha acids, tetrahydro-isoalpha acids, hexahydro-isoalpha acids, humulinones, hulupones and other modified or oxidized derivatives from alpha and/or beta acids and their salt forms which increases the load of the encapsulate (A), compared to the load of the encapsulate (A) when the glassy matrix (B) does not contain the substance selected from isoalpha acids, tetrahydro-isoalpha acids, hexahydro-isoalpha acids, humulinones, hulupones and other modified or oxidized derivatives from alpha and/or beta acids and their salt forms.

8. The composition of claim 1, wherein said hop oil fractions include hop-derived oil fractions containing at least one component which was generated by chemical or biochemical transformation or conversion of a hop oil component.

9. The composition of claim 1, wherein said botanical extract is at least one botanical extract selected from the group consisting of hops, cannabis, spice, herb, fruit, berry, vegetable, dairy, smoke-derived flavoring and aroma substances, essential oils, flavor chemicals as defined in the FEMA GRAS list, and combinations thereof.

10. The composition of claim 1, wherein the said plasticizer is at least one plasticizer selected from the group consisting of water, glycerin, and propylene glycol.

11. The composition of claim 1, wherein the encapsulate (A) contains an emulsifier.

12. A method of making the extrusion encapsulation composition of claim 1, the process comprising:
(i) mixing components of the glassy matrix (B), the encapsulate (A), and, optionally, a plasticizer, thereby obtaining a blend having a water content of below 10% by weight, and melting the blend, thereby obtaining a melted mixture comprising the encapsulate (A) and the glassy matrix (B) and having a water content of below 10% by weight,
(ii) extruding, shaping, and cooling said melted mixture, thereby obtaining said extrusion encapsulation composition, wherein said encapsulate (A) is encapsulated in the glassy matrix (B), and
(iii) optionally, drying the extruded encapsulation composition, wherein, the shaping is performed by extruding and die-face cutting the melted mixture to form particles.

13. Use of the composition according to any one of claims 1 to 11 to add aroma and flavor to beer or a non-beer beverage.

## Patentansprüche

1. Extrusionsverkapselungszusammensetzung in einem glasartigen Zustand, umfassend:
- ein Verkapselungsprodukt (A) zur Bereitstellung von Geschmack und Aroma, aber organoleptisch unbedeutender Bitterkeit für Bier, das mindestens eine Substanz enthält, die aus Gesamthopfenöl, Hopfenölfraktionen, von Hopfenöl abgeleiteten Einzelverbindungen, von Geschmacksvorläufern abgeleiteten Hopfenverbindungen oder Mischungen der vorgenannten Komponenten, optional mit anderen botanischen Extrakten, besteht
- verkapselt in (B) einer glasartigen Matrix, wobei die glasartige Matrix (B) umfasst: 88 bis 99 Gew.-%, bezogen auf das Gesamtgewicht der glasartigen Matrix (B), von mindestens einem Kohlenhydrat, das ein Maltodextrin, einen Zucker und/oder ein Polyol umfasst,
- wobei die Beladung des Gesamthopfenöls, der Hopfenölfraktionen, der von Hopfenöl abgeleiteten Einzelverbindungen, der von Geschmacksvorläufern abgeleiteten Hopfenverbindungen oder der Mischungen der vorgenannten Komponenten, optional mit anderen botanischen Extrakten, (A) von 4 Gew.-% bis 15 Gew.-%, bezogen auf das Gesamtgewicht der Extrusionsverkapselungszusammensetzung, beträgt, und
- wobei die Extrusionsverkapselungszusammensetzung durch ein Verfahren hergestellt wird, das umfasst:
(i) Mischen von Komponenten der glasartigen Matrix (B), des Verkapselungsprodukts (A) und optional eines Weichmachers, wodurch eine Mischung erhalten wird, die einen Wassergehalt von unter 10 Gew.-% aufweist, und Schmelzen der Mischung, wodurch ein geschmolzenes Gemisch erhalten wird, das das Verkapselungsprodukt (A) und die glasartige Matrix (B) umfasst und einen Wassergehalt von unter 10 Gew.-% aufweist;
(ii) Extrudieren, Formen und Abkühlen des geschmolzenen Gemischs, wodurch die Extrusionsverkapselungszusammensetzung erhalten wird, wobei das Verkapselungsprodukt (A) in der glasartigen Matrix (B) verkapselt ist, und
(iii) optional, Trocknen der extrudierten Verkapselungszusammensetzung, wobei das Formen durch Extrudieren und Düsenflächenschneiden des geschmolzenen Gemischs durchgeführt wird, um Partikel zu bilden;
**dadurch gekennzeichnet, dass**:
- die glasartige Matrix (B) umfasst: 0,5 bis 5 Gew.-%, bezogen auf das Gesamtgewicht der glasartigen Matrix (B), von mindestens einer Substanz, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist, und
- wobei die Beladung des Verkapselungsprodukts (A) aufgrund der Gegenwart der Isoalphasäuren, der Tetrahydro-isoalphasäuren, der Hexahydro-isoalphasäuren, der Humulinone, der Hulupone und/oder anderer modifizierter oder oxidierter Derivate von den Alpha- und/oder Betasäuren in der glasartigen Matrix (B) im Vergleich zu einem Grad des Verkapselungsprodukts (A) erhöht ist, wenn die glasartige Matrix (B) nicht mindestens eine von den Isoalphasäuren, den Tetrahydro-isoalphasäuren, den Hexahydro-isoalphasäuren, den Humulinonen, den Huluponen und/oder anderer modifizierter oder oxidierter Derivate von den Alpha- und/oder Betasäuren enthält.

2. Zusammensetzung nach Anspruch 1, wobei die glasartige Matrix (B) die Trübung bei Dispersion des Verkapselungsprodukts in wässrigen Medien im Vergleich zu einem Trübungsgrad verringert, der durch das Verkapselungsprodukt (A) verliehen wird, wenn die glasartige Matrix (B) nicht mindestens eine Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

3. Zusammensetzung nach Anspruch 1, wobei die glasartige Matrix (B) einen positiven Einfluss auf die Schaumstabilität bei Zugabe des Verkapselungsprodukts zu alkoholfreien und alkoholischen Getränken im Vergleich zu der Schaumstabilität des Getränks bei Zugabe des Verkapselungsprodukts (A) aufweist, wenn die glasartige Matrix (B) nicht mindestens eine Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

4. Zusammensetzung nach Anspruch 1, wobei die glasartige Matrix (B) die Oxidationsstabilität des Verkapselungsprodukts (A) im Vergleich zu der Oxidationsstabilität des Verkapselungsprodukts (A) verlängert, wenn die glasartige Matrix (B) nicht mindestens eine Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

5. Zusammensetzung nach Anspruch 1, wobei die glasartige Matrix (B) keine merkliche Bitterkeitszunahme im Vergleich zu einer glasartigen Matrix (B) verleiht, die ohne mindestens eine Substanz hergestellt wurde, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

6. Zusammensetzung nach Anspruch 1, wobei die glasartige Matrix (B) eine leichte merkliche Bitterkeitszunahme im Bereich von 0-10 BU im Vergleich zu einer Bitterkeit verleiht, die durch die glasartige Matrix (B) verliehen wird, wobei die glasartige Matrix (B) nicht mindestens eine Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

7. Zusammensetzung nach Anspruch 1, wobei die glasartige Matrix (B) mindestens ein Kohlenhydrat, das ein Maltodextrin, einen Zucker und/oder ein Polyol umfasst, und mindestens eine Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist, die die Beladung des Verkapselungsprodukts (A) im Vergleich zu der Beladung des Verkapselungsprodukts (A) erhöht, wenn die glasartige Matrix (B) nicht die Substanz enthält, die aus den Isoalphasäuren, den Tetrahydro-isoalphasäuren, den Hexahydro-isoalphasäuren, den Humulinonen, den Huluponen und anderen modifizierten oder oxidierten Derivaten von den Alpha- und/oder Betasäuren und ihren Salzformen ausgewählt ist.

8. Zusammensetzung nach Anspruch 1, wobei die Hopfenölfraktionen von Hopfen abgeleitete Ölfraktionen einschließen, die mindestens eine Komponente enthalten, die durch chemische oder biochemische Transformation oder Umwandlung einer Hopfenölkomponente erzeugt wurde.

9. Zusammensetzung nach Anspruch 1, wobei der botanische Extrakt mindestens ein botanischer Extrakt ist, der aus der Gruppe ausgewählt ist, die aus Hopfen, Cannabis, Gewürzen, Kräutern, Früchten, Beeren, Gemüse, Molkerei-, von Rauch abgeleiteten Geschmacks- und Aromastoffen, ätherischen Ölen, Geschmackschemikalien, wie sie in der FEMA-GRAS-Liste definiert sind, und Kombinationen davon besteht.

10. Zusammensetzung nach Anspruch 1, wobei der Weichmacher mindestens ein Weichmacher ist, der aus der Gruppe ausgewählt ist, die aus Wasser, Glycerin und Propylenglykol besteht.

11. Zusammensetzung nach Anspruch 1, wobei das Verkapselungsprodukt (A) einen Emulgator enthält.

12. Verfahren zum Herstellen der Extrusionsverkapselungszusammensetzung nach Anspruch 1, wobei das Verfahren umfasst:
(i) Mischen von Komponenten der glasartigen Matrix (B), des Verkapselungsprodukts (A) und optional eines Weichmachers, wodurch eine Mischung erhalten wird, die einen Wassergehalt von unter 10 Gew.-% aufweist, und Schmelzen der Mischung, wodurch ein geschmolzenes Gemisch erhalten wird, das das Verkapselungsprodukt (A) und die glasartige Matrix (B) umfasst und einen Wassergehalt von unter 10 Gew.-% aufweist;
(ii) Extrudieren, Formen und Abkühlen des geschmolzenen Gemischs, wodurch die Extrusionsverkapselungszusammensetzung erhalten wird, wobei das Verkapselungsprodukt (A) in der glasartigen Matrix (B) verkapselt ist, und
(iii) optional, Trocknen der extrudierten Verkapselungszusammensetzung, wobei das Formen durch Extrudieren und Düsenflächenschneiden des geschmolzenen Gemischs durchgeführt wird, um Partikel zu bilden.

13. Verwendung der Zusammensetzung nach einem der Ansprüche 1 bis 11, um Aroma und Geschmack zu Bier oder einem Nicht-Bier-Getränk hinzuzufügen.

## Revendications

1. Composition d'encapsulation par extrusion à l'état vitreux, comprenant :
- un encapsulé (A) destiné à conférer à la bière un goût et un arôme, mais une amertume négligeable sur le plan organoleptique, contenant au moins une substance constituée d'huile de houblon entière, de fractions d'huile de houblon, de composés simples dérivés de l'huile de houblon, de composés de houblon dérivés de précurseurs de saveur ou de mélanges des composants susmentionnés, éventuellement avec d'autres extraits botaniques
- encapsulé dans (B) une matrice vitreuse, dans laquelle ladite matrice vitreuse (B) comprend : 88 à 99 % en poids, par rapport au poids total de ladite matrice vitreuse (B), d'au moins un glucide comprenant une maltodextrine, un sucre et/ou un polyol,
- dans laquelle la charge d'huile de houblon entière, de fractions d'huile de houblon, de composés simples dérivés de l'huile de houblon, de composés de houblon dérivés de précurseurs de saveur ou de mélanges des composants susmentionnés, éventuellement avec d'autres extraits botaniques (A), est comprise entre 4 % et 15 % en poids, par rapport au poids total de la composition d'encapsulation par extrusion, et
- dans laquelle ladite composition d'encapsulation par extrusion est préparée par un processus comprenant :
(i) le mélange de composants de la matrice vitreuse (B), de l'encapsulé (A) et, éventuellement, d'un plastifiant, obtenant ainsi un mélange ayant une teneur en eau inférieure à 10 % en poids, et la fusion du mélange, obtenant ainsi un mélange fondu comprenant l'encapsulé (A) et la matrice vitreuse (B) et ayant une teneur en eau inférieure à 10 % en poids ;
(ii) l'extrusion, la mise en forme et le refroidissement dudit mélange fondu, obtenant ainsi ladite composition d'encapsulation par extrusion, dans laquelle ledit encapsulé (A) est encapsulé dans la matrice vitreuse (B), et
(iii) éventuellement, le séchage de la composition d'encapsulation extrudée, dans laquelle la mise en forme est réalisée par extrusion et découpe à la sortie de la filière du mélange fondu pour former des particules ;
**caractérisée en ce que** :
- la matrice vitreuse (B) comprend : 0,5 à 5 % en poids, par rapport au poids total de ladite matrice vitreuse (B), d'au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines, et
- dans laquelle la charge de l'encapsulé (A) est augmentée en raison de la présence des acides isoalpha, des acides tétrahydro-isoalpha, des acides hexahydro-isoalpha, des humulinones, des hulupones et/ou autres dérivés modifiés ou oxydés d'acides alpha et/ou bêta dans la matrice vitreuse (B), par rapport à un niveau de l'encapsulé (A) lorsque la matrice vitreuse (B) ne contient pas au moins l'un des acides isoalpha, des acides tétrahydro-isoalpha, des acides hexahydro-isoalpha, des humulinones, des hulupones et/ou d'autres dérivés modifiés ou oxydés d'acides alpha et/ou bêta.

2. Composition selon la revendication 1, dans laquelle ladite matrice vitreuse (B) diminue la turbidité lors de la dispersion de l'encapsulé dans un milieu aqueux, par rapport à un niveau de turbidité conféré par l'encapsulé (A) lorsque la matrice vitreuse (B) ne contient pas au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

3. Composition selon la revendication 1, dans laquelle ladite matrice vitreuse (B) a un impact positif sur la stabilité de la mousse lors de l'ajout de l'encapsulé à des boissons non alcoolisées et alcoolisées, par rapport à la stabilité de la mousse de la boisson lors de l'ajout de l'encapsulé (A) lorsque la matrice vitreuse (B) ne contient pas au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

4. Composition selon la revendication 1, dans laquelle ladite matrice vitreuse (B) prolonge la stabilité oxydative de l'encapsulé (A), par rapport à la stabilité oxydative de l'encapsulé (A) lorsque la matrice vitreuse (B) ne contient pas au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

5. Composition selon la revendication 1, dans laquelle ladite matrice vitreuse (B) n'entraîne aucune augmentation notable de l'amertume, par rapport à une matrice vitreuse (B) préparée sans au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

6. Composition selon la revendication 1, dans laquelle ladite matrice vitreuse (B) entraîne une légère augmentation notable de l'amertume comprise dans la plage de 0 à 10 BU, par rapport à l'amertume conférée par la matrice vitreuse (B), dans laquelle ladite matrice vitreuse (B) ne contient pas au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

7. Composition selon la revendication 1, dans laquelle ladite matrice vitreuse (B) contient au moins un glucide comprenant une maltodextrine, un sucre et/ou un polyol, et au moins une substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines, qui augmente la charge de l'encapsulé (A), par rapport à la charge de l'encapsulé (A) lorsque la matrice vitreuse (B) ne contient pas la substance choisie parmi des acides isoalpha, des acides tétrahydro-isoalpha, des acides hexahydro-isoalpha, des humulinones, des hulupones et autres dérivés modifiés ou oxydés d'acides alpha et/ou bêta et leurs formes salines.

8. Composition selon la revendication 1, dans laquelle lesdites fractions d'huile de houblon comportent des fractions d'huile dérivées du houblon contenant au moins un composant qui a été généré par transformation ou conversion chimique ou biochimique d'un composant d'huile de houblon.

9. Composition selon la revendication 1, dans laquelle ledit extrait botanique est au moins un extrait botanique choisi dans le groupe constitué de houblon, de cannabis, d'épices, d'herbes, de fruits, de baies, de légumes, de produits laitiers, de substances aromatisantes et aromatiques dérivées de fumée, d'huiles essentielles, de produits chimiques aromatisants tels que définis dans la liste FEMA GRAS, et de combinaisons de ceux-ci.

10. Composition selon la revendication 1, dans laquelle ledit plastifiant est au moins un plastifiant choisi dans le groupe constitué de l'eau, de la glycérine et du propylène glycol.

11. Composition selon la revendication 1, dans laquelle l'encapsulé (A) contient un émulsifiant.

12. Procédé de fabrication de la composition d'encapsulation par extrusion selon la revendication 1, le processus comprenant :
(i) le mélange de composants de la matrice vitreuse (B), de l'encapsulé (A) et, éventuellement, d'un plastifiant, obtenant ainsi un mélange ayant une teneur en eau inférieure à 10 % en poids, et la fusion du mélange, obtenant ainsi un mélange fondu comprenant l'encapsulé (A) et la matrice vitreuse (B) et ayant une teneur en eau inférieure à 10 % en poids ;
(ii) l'extrusion, la mise en forme et le refroidissement dudit mélange fondu, obtenant ainsi ladite composition d'encapsulation par extrusion, dans lequel ledit encapsulé (A) est encapsulé dans la matrice vitreuse (B), et
(iii) éventuellement, le séchage de la composition d'encapsulation extrudée, dans lequel la mise en forme est réalisée par extrusion et découpe à la sortie de la filière du mélange fondu pour former des particules.

13. Utilisation de la composition selon l'une quelconque des revendications 1 à 11 pour ajouter de l'arôme et de la saveur à une bière ou à une boisson autre que la bière.
